# EUROPÄISCHE PATENTSCHRIFT

(11) **EP 3 609 718 B1**
(45) Veröffentlichungstag und Bekanntmachung des Hinweises auf die Patenterteilung: **09.06.2021**
(21) Anmeldenummer: 18719439.4
(22) Anmeldetag: 10.04.2018
(51) Int. Cl.: B42D 25/391, B42D 25/373, B42D 25/351, B42D 25/328, B42D 25/324, B42D 25/29, B42D 25/24, B42D 25/23, B42D 25/45, B42D 25/425, G02B 5/18

(54) **SICHERHEITSELEMENT UND HERSTELLUNGSVERFAHREN HIERFÜR**
SECURITY ELEMENT AND METHOD FOR PRODUCING SAME
ÉLÉMENT DE SÉCURITÉ ET SON PROCÉDÉ DE FABRICATION

(30) Priorität: 11.04.2017 DE 102017003532
(43) Veröffentlichungstag der Anmeldung: 19.02.2020
(73) Patentinhaber: Giesecke+Devrient Currency Technology GmbH, 81677 München (DE)
(72) Erfinder: LOCHBIHLER, Hans, 80337 München (DE)
(86) Internationale Anmeldenummer: PCT/EP2018/000179
(87) Internationale Veröffentlichungsnummer: WO 2018/188787

(56) Entgegenhaltungen:
- WO-A1-2012/069163
- WO-A1-2013/053435
- WO-A1-2016/012084
- WO-A1-2017/021000
- US-A1- 2015 251 480

## Beschreibung

Die Erfindung bezieht sich auf ein Sicherheitselement zur Herstellung von Wertdokumenten, wie Banknoten, Schecks oder dergleichen, das aufweist: ein dielektrisches Substrat, ein Liniengitter, das in das Substrat eingebettete, längs einer Längsrichtung verlaufende und in einer ersten Ebene angeordnete erste Gitterstege und in das Substrat eingebettete, längs der Längsrichtung verlaufende und in einer zur ersten Ebene parallelen, zweiten Ebene angeordnete zweite Gitterstege aufweist, wobei die ersten und zweiten Gitterstege jeweils aus einem hochbrechenden Material bestehen, die zweiten Gitterstege sich bezogen auf die erste Ebene vollständig oberhalb der ersten Gitterstege befinden, so dass die ersten und zweiten Gitterstege keinen zusammenhängenden Film bilden und die ersten Gitterstege jeweils eine Breite haben und in einem Abstand nebeneinanderliegen, so dass zwischen den ersten Gitterstegen längs der Längsrichtung verlaufende erste Gitterspalte mit dem Abstand entsprechender Breite gebildet sind, die Anordnung der zweiten Gitterstege zu der der ersten Gitterstege invertiert ist, so dass in Draufsicht auf die erste oder zweite Ebene die zweiten Gitterstege über den ersten Gitterspalten und zweite Gitterspalte, die zwischen den zweiten Gitterstegen bestehen, unter den ersten Gitterstegen liegen, die Breite der ersten Gitterstege und der zweiten Gitterspalte, die Breite der zweiten Gitterstege und der ersten Gitterspalte und eine Dicke der ersten Gitterstege und der zweiten Gitterstege jeweils unter 300 nm ist, im Sicherheitselement verschiedene Bereiche gebildet sind, die sich hinsichtlich der Ausgestaltung des Liniengitters unterscheiden, wobei die verschiedenen Bereiche mindestens ein Motiv codieren, das in Draufsicht auf das Sicherheitselement sichtbar ist.

Die Erfindung bezieht sich weiter auf ein Wertdokument mit einem Sicherheitselement.

Die Erfindung bezieht sich schließlich auch auf Herstellungsverfahren für ein Sicherheitselement zur Herstellung von Wertdokumenten, wie Banknoten, Schecks oder dergleichen, wobei: ein dielektrisches Substrat bereitgestellt wird, ein Liniengitter in das Substrat eingebettet wird, das längs einer Längsrichtung verlaufende und in einer ersten Ebene angeordnete erste Gitterstege und längs der Längsrichtung verlaufende und in einer zur ersten Ebene parallelen, zweiten Ebene angeordnete zweite Gitterstege aufweist, wobei die ersten und zweiten Gitterstege jeweils aus einem hochbrechenden, dielektrischem Material bestehen, die zweiten Gitterstege sich bezogen auf die erste Ebene vollständig oberhalb der ersten Gitterstege befinden, so dass die ersten und zweiten Gitterstege keinen zusammenhängenden Film bilden und die ersten Gitterstege jeweils eine Breite haben und in einem Abstand nebeneinanderliegen, so dass zwischen den ersten Gitterstegen längs der Längsrichtung verlaufende erste Gitterspalte mit dem Abstand entsprechender Breite gebildet sind, die Anordnung der zweiten Gitterstege zu der der ersten Gitterstege invertiert ist, so dass in Draufsicht auf die erste oder zweite Ebene die zweiten Gitterstege über den ersten Gitterspalten und zweite Gitterspalte, die zwischen den zweiten Gitterstegen bestehen, unter den ersten Gitterstegen liegen, die Breite der ersten Gitterstege und der zweiten Gitterspalte, die Breite der zweiten Gitterstege und der ersten Gitterspalte und eine Dicke der ersten Gitterstege und der zweiten Gitterstege jeweils unter 300 nm ist, im Sicherheitselement verschiedene Bereiche ausgebildet werden, in denen sich die Ausgestaltung des Liniengitters unterscheidet, wobei die verschiedenen Bereiche mindestens ein Motiv codieren, das in Draufsicht auf das Sicherheitselement sichtbar ist.

Sicherheitselemente von Wertdokumenten mit periodischen Liniengittern sind bekannt, beispielsweise aus der DE 102009012299 A1, DE 102009012300 A1 oder der DE 102009056933 A1. Sie können im Subwellenlängenbereich Farbfiltereigenschaften aufweisen, wenn das Gitterprofil so ausgelegt ist, dass Resonanzeffekte im sichtbaren Wellenlängenbereich auftreten. Solche Farbfiltereigenschaften sind sowohl für reflektierende als auch für transmittierende Subwellenlängenstrukturen bekannt. Diese Strukturen haben einen stark polarisierenden Einfluss auf die Reflexion bzw. die Transmission eines einfallenden Lichtstrahls. Die Farbe ist in Reflexion bzw. Transmission solcher Subwellenlängengitter relativ stark winkelabhängig. Jedoch schwächt sich die Farbsättigung für diese Gitter deutlich ab, wenn das einfallende Licht unpolarisiert ist.

Aus den Veröffentlichungen WO 2013/053435 A1 und H. Lochbihler, "Colored images generated by metallic sub-wavelength gratings", Opt. Express, Vol. 17, Seiten 12189 - 12196, 2009, ist ein gattungsgemäßes, eindimensionales Liniengitter mit Subwellenlängenstrukturen bekannt, welches winkelabhängige, farbfilternde Eigenschaften besitzt. Das Liniengitter besitzt ein Rechteckprofil aus einem hochbrechenden oder metallischen Material. Es ist in ein transparentes dielektrisches Material eingebettet. Dadurch ist eine optisch wirksame Struktur ausgebildet, die aus zwei Gittern aus dem hochbrechenden bei der Herstellung verwendeten Material besteht, welche durch die Höhe des Reliefgitters mit einem Rechteckprofil beabstandet sind. Der zugrunde liegende Guided-Mode-Resonance-Effekt bildet dadurch Resonanzen aus, dass ein wesentlicher Anteil des einfallenden Lichts durch ein dielektrisches Gitter in eine Wellenleiterschicht eingekoppelt wird und dieser Lichtanteil wiederum konstruktiv bzw. destruktiv mit dem einfallenden Licht interferiert. Diese Struktur bietet sich als Sicherheitsmerkmal in Reflexion an, da sie sehr charakteristische optische Eigenschaften im sichtbaren Bereich aufweist. Dokument WO 2013/053435 A1 offenbart die Merkmale des Oberbegriffs des Anspruchs 1.

In US 694392 ist ein solches Liniengitter beschrieben, welches auf einem farbigen bzw. schwarzen Untergrund angeordnet ist. Dieser Untergrund besteht aus einer Druckfarbe und kann auch transparente Bereiche beinhalten. Ferner sind übereinanderliegende Gitteranordnungen bekannt, bei denen das Liniengitter über einem weiteren dielektrischen Gitter liegt, das auf der Unterseite bereichsweise schwarz bedruckt ist (vgl. US 2015/0251480 A1).

Der Erfindung liegt die Aufgabe zugrunde, ein Sicherheitselement anzugeben, das hinsichtlich der Fälschungssicherheit nochmals verbessert ist.

Die Erfindung ist in den Ansprüchen 1, 10 und 11 definiert.

Das Sicherheitselement weist ein Liniengitter auf, das in ein Substrat eingebettet ist. Es hat erste und zweite Gitterstege, die jeweils parallel zueinander und längs einer Längsrichtung verlaufen. Beide Gitterstege sind in das Substrat eingebettet. Die Gitterstege befinden sich in Ebenen, die parallel zueinander liegen, so dass erste Gitterstege vorhanden sind, die in einer ersten Ebene angeordnet sind, und zweite Gitterstege, die in einer dazu parallelen zweiten Ebene liegen. Die ersten und die zweiten Gitterstege bestehen jeweils aus einer hochbrechenden Schicht und haben bevorzugt einen rechteckigen Querschnitt. Die Ebenen bzw. die Gitterstege sind so angeordnet, dass sich die zweiten Gitterstege vollständig oberhalb der ersten Gitterstege befinden. Dadurch bilden erste und zweite Gitterstege keinen zusammenhängenden Film. Die ersten Gitterstege haben eine Breite und liegen in einem Abstand nebeneinander, so dass zwischen den ersten Gitterstegen erste Gitterspalte bestehen, deren Breite dem Abstand entspricht, in dem die ersten Gitterstege nebeneinanderliegen. Gleiches gilt für die zweiten Gitterstege, die in ihrer Anordnung hinsichtlich den ersten Gitterstegen invertiert sind. Somit liegen in Draufsicht auf die erste oder die zweite Ebene die zweiten Gitterstege exakt über den ersten Gitterspalten und die zweiten Gitterspalte, welche zwischen den zweiten Gitterstegen gebildet sind, liegen unter den ersten Gitterstegen. Die Breite der Gitterstege und der Gitterspalte sowie die Dicke der im Querschnitt bevorzugt rechteckigen Gitterstege liegen jeweils unter 300 nm, so dass das Liniengitter als Subwellenlängenstruktur aufzufassen ist. Solche Liniengitter haben einen Farbfiltereffekt, der vom Winkel des einfallenden Lichtes abhängt, wobei der Winkel in der Regel auf die Längsrichtung des Liniengitters bezogen ist. Eine Farbänderung tritt bei einer Variation des Einfallswinkels ein. Wenn das Gitter senkrecht zur Einfallsebene gekippt wird, bleibt die Farbe annähernd konstant. Die Struktur des Liniengitters, z.B. Geometrie oder Materialwahl, ganz besonders die Orientierung der Längsrichtung, beeinflusst den Farbeffekt. Es sind deshalb im Sicherheitselement verschiedene Bereiche gebildet, die sich hinsichtlich der Struktur des Liniengitters unterscheiden. Die verschiedenen Bereiche codieren mindestens ein Motiv, das in Draufsicht auf das Sicherheitselement sichtbar ist. Beispielsweise können die Bereiche den Vordergrund und den Hintergrund eines Motivs farblich gegeneinander abheben. Unterhalb des Liniengitters ist eine metallisierte Reliefstruktur angeordnet. Sie weist verschiedene Abschnitte auf. Diese unterscheiden sich hinsichtlich des Reliefs folglich in der Strahlungsreflexion. Beispielsweise haben die Abschnitte einen unterschiedlichen Absorptionsgrad. Die verschiedenen Abschnitte der metallisierten Reliefstruktur sind den verschiedenen Bereichen des Liniengitters zugeordnet. Sie strukturieren das Motiv zusätzlich.

Die Verwendung metallisierter, abschnittsweise hinsichtlich der Reflexions- oder Absorptionseigenschaften unterschiedlicher Reliefstrukturen unterhalb des Liniengitters erleichtert die Herstellung des Sicherheitselementes beträchtlich, da man sich zur Erzeugung des Liniengitters und der Reliefstruktur auf Prägeprozesse beschränken kann. Durch dieses Vorgehen werden Passerungsanforderungen, die beispielsweise beim herkömmlichen Drucken einer absorbierenden Schicht entstünden, vermieden. Zugleich erlaubt die metallisierte Reliefstruktur eine kontrastreichere Strukturierung, als dies beispielsweise mit Druckprozessen möglich wäre. Auch sind nun reflektive Abschnitte realisierbar. Die metallisierte Reliefstruktur erlaubt es, den Untergrund, welcher unter dem Liniengitter angeordnet ist, mit zusätzlichen Strukturen zu versehen, die das Motiv, welches vom Liniengitter erzeugt wird, zusätzlich strukturieren oder um weitere Inhalte ergänzen und damit eine weitere Ausgestaltung erlauben. Dadurch ist die Designvielfalt für das Sicherheitsmerkmal gesteigert. Da Prägeprozesse schwer nachzubilden oder nachzuahmen sind, ist zudem die Fälschungssicherheit deutlich erhöht.

Die unterschiedlichen Bereiche des Liniengitters erzeugen einen Farbeffekt, der sich bei ein und derselben Betrachtungsrichtung unterscheidet, wodurch das mindestens eine Motiv codiert ist. Der unterschiedliche Farbeffekt wird von der Struktur des Liniengitters vorgegeben. Er kann sich dabei z.B. um die Orientierung der Längsrichtung und/oder Profilparameter und/oder Materialwahl des Liniengitters handeln.

Das hochbrechende Material der Gitterstege hat eine Brechzahl, die höher ist als die des umgebenden Substrates. Dabei muss das Substrat nicht in allen Bereichen, beispielsweise oberhalb und unterhalb der ersten bzw. zweiten Gitterstege dieselbe Brechzahl haben. Es genügt, wenn die Brechzahlen ungefähr gleich sind, solange die Bedingung eingehalten wird, dass das hochbrechende Material der Gitterstege eine deutlich höhere Brechzahl hat. Als Materialien für die Gitterstege kommen insbesondere infrage: ZnS, ZnO, ZnSe, SiNₓ, SiOx, Cr₂O₃, Nb₂O₅, Ta₂O₅, TiₓOₓ SiOx und ZrO₂. Sie können zwischen den Bereichen variieren.

Die unterhalb des Liniengitters angeordnete Reliefstruktur variiert die Reflexionseigenschaften in den Abschnitten. Dabei ist es besonders bevorzugt, wenn der Absorptionsgrad und dadurch der Reflexionsgrad variiert. Dies ist besonders gut möglich, wenn die Reliefstruktur eine Mottenaugenstruktur mit einer mittleren Periode von 150 nm bis 500 nm enthält. Solche Mottenaugenstrukturen sind im Stand der Technik als hochabsorbierende Reliefstrukturen bekannt. Wechselt man in den Abschnitten zwischen Mottenaugenstrukturen und vergleichsweise gering absorbierenden, z.B. glatten und spiegelnden Bereichen, lässt sich eine gute zusätzliche Strukturierung des Motivs durch die Reliefstruktur erreichen.

Die Reliefstruktur kann auch einen zusätzlichen Farbeffekt erzeugen. Für solche Farbeffekte sind beispielsweise Mikrokavitätenstrukturen mit einer mittleren Periode von 500 nm bis 2.000 nm bekannt. Aus dem Stand der Technik sind beispielsweise Reliefstrukturen mit Mikrospiegeln bekannt (vgl. DE 102010049617 A1). Diese Mikrospiegel können in Pixeln angeordnet sein, die jeweils gleich orientierte Mikrospiegel aufweisen. Weiter können Fresnelstrukturen (vgl. EP 1562758 B1) verwendet werden oder auch mit Mikrospiegeln kombiniert werden. Für Mikrospiegel sind Reliefhöhen von maximal 5 µm bis maximal 100 µm bekannt und lateral Abmessungen von unter 15 µm bis unter 100 µm. Eine weitere bekannte Reliefstruktur zum Erzeugen eines Motivs sind Hologrammgitter in Form von Reliefhologrammen. Sie bestehen aus metallisierten Reliefstrukturen mit Gitterperioden von 500 nm bis 2 µm und sind so angeordnet, dass ein Betrachter ein Motiv oder ein Echtfarbenbild in der ersten Beugungsordnung wahrnimmt. Die US 9188716 B1 verwendet Reliefstrukturen in Form von Retroreflexionsstrukturen zum Erzeugen farbiger Motive. Durch pixelweise Anordnung von Reliefstrukturen mit unterschiedlichen Profilparametern können Bilder in der nullten Beugungsordnung erzeugt werden, die ebenfalls verwendet werden können. Weiter ist es möglich, mit der Aneinanderreihung von bestimmten Reliefstrukturen, beispielsweise Mikrostrukturen, Bewegungseffekte in einem Bild hervorzurufen (vgl. DE 102010047250 A1). All diese verschiedenen Reliefstrukturen können verwendet werden. Ein weiteres Beispiel für Subwellenstrukturen sind sogenannte Mottenaugenstrukturen (vgl. WO 2006/026975 A2 und EP 2453269 A1).

In der Struktur des Motivs, welches vom Liniengitter erzeugt wird, kann man durch Abschnitte der darunter angeordneten Reliefstruktur den Farbeffekt des Liniengitters verstärken (wie dies beispielsweise bei einer hochabsorbierenden Reliefstruktur der Fall ist) oder abschwächen. Hierzu ist es bevorzugt, dass die Reliefstruktur mindestens einen glatten Abschnitt oder Mikrospiegelelemente enthält. Dann wird das Liniengitter in diesen Abschnitten doppelt durchstrahlt, so dass der Farbeffekt der Liniengitterstruktur verändert wirkt.

Die Beschichtung der Reliefstruktur kann beispielsweise mit Aluminium, Silber, Kupfer, Palladium, Gold, Chrom, Nickel oder einer Legierung daraus erfolgen. Auch kann eine Multilayer-Konstruktion mit mindestens einer metallischen Schicht verwendet werden.

Das Liniengitter besteht aus zwei übereinanderliegenden komplementär zueinander aufgebauten, d.h. gegeneinander verschobenen Liniengitterstrukturen. Eine Phasenverschiebung von 90° ist der Idealwert, welcher natürlich im Rahmen der Fertigungsgenauigkeit zu sehen ist. Durch Fertigungstoleranzen können hier Abweichungen von der Komplementarität, also 90° Phasenverschiebung, entstehen, da in der Regel ein Rechteckprofil nicht perfekt ausgebildet, sondern nur durch ein Trapezprofil angenähert werden kann, dessen obere Parallelkante kürzer ist als die untere Parallelkante. Die Dicke der Gitterstege ist geringer als die Modulationstiefe, also als der Abstand der Ebenen.

Das Sicherheitselement kann einfach durch einen Schichtaufbau hergestellt werden, indem zuerst eine Grundschicht bereitgestellt wird, auf der die erste Struktur für die ersten Gitterstege ausgebildet wird. Darauf bringt man eine dielektrische Zwischenschicht auf, die die ersten Gitterstege überdeckt und bevorzugt dicker als die ersten Gitterstege ist. Darauf können dann die verschobenen zweiten Gitterstege ausgebildet werden und eine dielektrische Deckschicht bildet den Abschluss des einbettenden Substrates. Alternativ kann auch in dem dielektrischen Substrat zuerst ein Subwellengitter ausgebildet werden, das ein Rechteckprofil im Querschnitt hat. Bedampft man dieses senkrecht mit dem hochbrechenden Material, entsteht eine Schicht auf den Plateaus und in den Gräben, welche die ersten und zweiten Gitterstege bilden. Man hat damit die gewünschte, nicht zusammenhängende hochbrechende Schicht der ersten und zweiten Gitterstege in unterschiedlichen Ebenen, wenn die Schichtdicke der Gitterstege geringer ist als die Modulationstiefe des Rechteckprofils des zuvor strukturierten dielektrischen Substrates.

Einen besonders guten Farbeffekt erhält man, wenn der Abstand zwischen den ersten und den zweiten Gitterstegen, also die Modulationstiefe der Struktur, zwischen 50 nm und 500 nm, bevorzugt zwischen 100 nm und 300 nm liegt. Der Abstand ist dabei von jeweils gleichweisenden Flächen der ersten und zweiten Liniengitterstruktur zu bemessen, d.h. beispielsweise von der Unterseite der ersten Gitterstege zur Unterseite der zweiten Gitterstege bzw. von der Oberseite der ersten Gitterstege zur Oberseite der zweiten Gitterstege. Der Abstand ist dabei selbstverständlich senkrecht zur Ebene zu messen, bezeichnet also den Höhenunterschied zwischen den gleichgerichteten Flächen der Gitterstege.

Natürlich ist auch ein Sicherheitselement mit mehreren unterschiedlich angeordneten Bereichen denkbar, die sich voneinander hinsichtlich der Längsrichtung, entlang der die Gitterstege verlaufen, unterscheiden. Dadurch können Motive mit mehreren Farben hergestellt werden. Besonders bevorzugt ist es dabei, dass zwischen mehreren solchen Bereichen, die nebeneinanderliegen, die Längsrichtung graduell von einem Bereich zum nächsten in bestimmten Winkelschritten variiert wird, beispielsweise in 5°-, 10°- oder 15°-Schritten. Verdreht man eine solche Struktur nebeneinanderliegender Bereiche vor einer pulverisierten Lichtquelle, vertauschen sich die Farben annähernd kontinuierlich mit zunehmendem Drehwinkel der Struktur. Für einen Beobachter ergibt dies z.B. eine Art Bewegungseffekt bei einem entsprechenden Motiv, wenn das Gitter um die horizontale Achse gekippt wird. Es tritt eine Farbänderung in den Bereichen mit zunehmenden schräg verlaufenden Gitterlinien verzögert gegenüber den Bereichen mit den horizontaler verlaufenden Gitterlinien auf.

Es versteht sich, dass die vorstehend genannten und die nachstehend noch zu erläuternden Merkmale nicht nur in den angegebenen Kombinationen, sondern auch in anderen Kombinationen einsetzbar sind, ohne den Rahmen der vorliegenden Erfindung zu verlassen, soweit dies von dem Schutzumfang der Ansprüche erfasst ist.

Nachfolgend wird die Erfindung beispielshalber anhand der beigefügten Zeichnungen, die auch erfindungswesentliche Merkmale offenbaren, noch näher erläutert. Es zeigen:
- Fig. 1: eine Schnittdarstellung eines Sicherheitselementes,
- Fig. 2a-c und 3a-c: die spektrale Reflexion des Sicherheitselementes der Fig. 1 für drei verschiedene Gitterstegmaterialien, jeweils für polarisiertes Licht (Fig. 2a-c) bzw. unpolarisiertes Licht verschiedener Einfallswinkel (Fig. 3a-c),
- Fig. 4: Farbwerte im LCh-Farbraum für Reflexion für das Sicherheitselement der Fig. 1 bei Variation einer Gitterstegdicke und als Funktion des Einfallswinkels,
- Fig. 5: Farbwerte im CIE-1931-Farbraum für Reflexion für das Sicherheitselement der Fig. 4,
- Fig. 6: Farbwerte im LCh-Farbraum für Reflexion für das Sicherheitselement der Fig. 1 bei Variation einer Modulationstiefe und als Funktion des Einfallswinkels,
- Fig. 7: Farbwerte im CIE-1931-Farbraum für Reflexion für das Sicherheitselement der Fig. 6,
- Fig. 8: Farbwerte im LCh-Farbraum für Reflexion für das Sicherheitselement der Fig. 1 bei Variation einer Gitterperiode und als Funktion des Einfallswinkels,
- Fig. 9: Farbwerte im CIE-1931-Farbraum für Reflexion für die Sicherheitselemente der Fig. 8,
- Fig. 10: Farbwerte im LCh-Farbraum für Reflexion für das Sicherheitselement der Fig. 1 für verschiedene Gitterstegmaterialien und als Funktion des Einfallswinkels,
- Fig. 11: Farbwerte im CIE-1931-Farbraum für Reflexion für die Sicherheitselemente der Fig. 10,
- Fig. 12a und b: Schnittdarstellungen ähnlich der Fig. 1 von Sicherheitselementen mit unterschiedlichen Reliefstrukturen,
- Fig. 13: die spektrale Reflexion des Sicherheitselementes der Fig. 12b,
- Fig. 14: einen Sicherheitsfaden mit dem Sicherheitselement der Fig. 12a und
- Fig. 15: ein Sicherheitselement, das mittels Liniengittern mit variierender Gitterperiode einen Bewegungseffekt erzeugt.

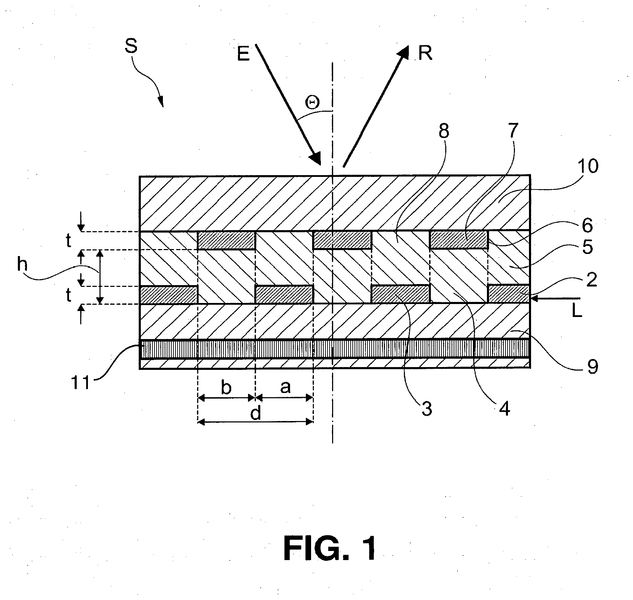

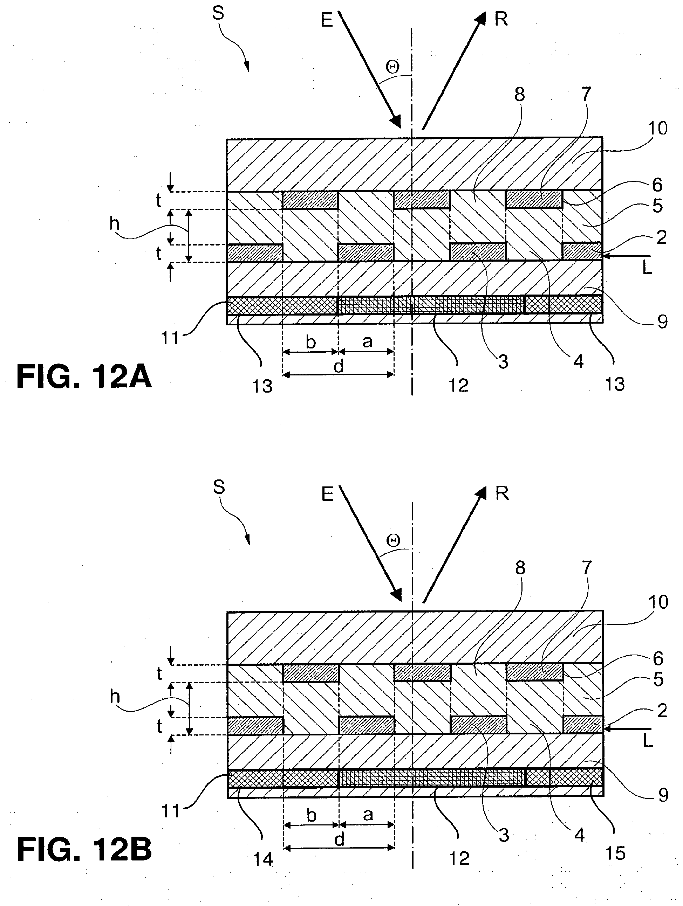

Fig. 1 zeigt in Schnittdarstellung einen Teil eines Sicherheitselements S, das ein in ein Substrat 1 eingebettetes Liniengitter aufweist. Die Schnittdarstellung der Fig. 1 ist dabei dahingehend vereinfacht, als eine unterhalb des Liniengitters angeordnete metallisierte Reliefstruktur, die Strahlung zumindest abschnittsweise absorbiert, ohne weitere Struktur eingezeichnet ist. Tatsächlich ist die Reliefstruktur 11 in Abschnitte strukturiert, wie es später anhand der Figuren 12a und b näher erläutert wird. Bis dahin geht die Beschreibung zur Vereinfachung davon aus, dass die Reliefstruktur 11 vollflächig absorbiert, also nicht in Abschnitte unterteilt ist. Dies dient ausschließlich dem besseren Verständnis der Wirkung des Liniengitters und stellt eine Vereinfachung gegenüber den Ausführungsformen der Erfindung dar.

In das Substrat 1 ist eine erste Gitterstruktur 2 eingearbeitet, die in einer Ebene L1 angeordnet ist. Die erste Gitterstruktur besteht aus ersten Gitterstegen 3 mit der Breite a, die sich längs einer senkrecht zur Zeichenebene liegenden Längsrichtung erstrecken. Zwischen den ersten Gitterstegen 3 befinden sich erste Gitterspalte 4, die eine Breite b haben. Die Dicke der ersten Gitterstege 3 (gemessen senkrecht zur Ebene L1) ist mit t angegeben. In einer Höhe h über den ersten Gitterstegen 3 befindet sich eine zweite Gitterstruktur 6 mit zweiten Gitterstegen 7. Diese haben die Breite b. Die zweite Gitterstruktur 6 ist so gegenüber der ersten Liniengitterstruktur 2 phasenverschoben, dass die zweiten Gitterstege 7 möglichst exakt (im Rahmen der Fertigungsgenauigkeit) über den ersten Gitterspalten 4 zu liegen kommen. Gleichzeitig liegen zweite Gitterspalte 8, die zwischen den zweiten Gitterstegen 7 bestehen, über den ersten Gitterstegen 3. Die Dicke t ist kleiner als die Höhe h, so dass kein zusammenhängender Film aus den Gitterstegen 3 und 7 gebildet ist. In der schematischen Schnittdarstellung der Fig. 1 ist die Breite a der ersten Gitterstege 3 gleich der Breite b der zweiten Gitterstege 7. Bezogen auf eine Periode d beträgt somit in jeder Liniengitterstruktur der Füllfaktor 50%. Dies ist jedoch nicht zwingend. Gemäß der Formel b + a = d kann eine beliebige Variation erfolgen. Auch ist in der schematischen Schnittdarstellung der Fig. 1 die Dicke t der ersten Gitterstege 2 gleich der Dicke t der zweiten Gitterstege 7. Dies kommt einer einfacheren Herstellung zugute, ist jedoch nicht zwingend erforderlich. Wesentlich ist jedoch, dass die Modulationstiefe h, d.h. der Höhenunterschied zwischen der ersten Gitterstruktur 2 und der zweiten Gitterstruktur 6 größer ist als die Summe der Dicken der ersten Gitterstege 3 und der zweiten Gitterstege 7, da ansonsten keine Trennung zwischen den beiden Gitterstrukturen 2 und 6 gegeben wäre. Die Reflexionseigenschaften hängen vom Einfallswinkel θ ab, wie nachfolgend noch erläutert wird. Die Maße b, a und t sind im Subwellenlängenbereich, d.h. kleiner als 300 nm. Die Modulationstiefe beträgt bevorzugt zwischen 50 nm und 500 nm.

Die Herstellung des Sicherheitselementes S kann beispielsweise dadurch erfolgen, dass auf eine Grundschicht 9 zuerst die erste Gitterstruktur 2 und darauf eine Zwischenschicht 5 aufgebracht wird. In die dabei nach oben abgebildete Gitterspalte 4 kann dann die zweite Gitterstruktur mit den zweiten Gitterstegen 7 eingebracht werden. Eine Deckschicht 10 deckt das Sicherheitselement ab. Die Brechzahlen der Schichten 9, 5 und 10 sind im Wesentlichen gleich und können beispielsweise etwa 1,5, insbesondere 1,52 betragen. Es ist aber auch ein Herstellungsverfahren möglich, bei dem zuerst auf einer Oberseite des Substrates 1 ein Rechteckgitter mit einer Profiltiefe h hergestellt wird. Das Substrat 1 wird so strukturiert, dass Gräben der Breite a sich mit Stegen der Breite b abwechseln. Das strukturierte Substrat wird anschließend mit der gewünschten Beschichtung von oben senkrecht bedampft, so dass die Gitterstrukturen entstehen. Nach der Bedampfung wird schließlich die Struktur mit einer Deckschicht abgedeckt. Man erhält damit einen Schichtaufbau, bei dem die Ober- und Unterseite im Wesentlichen denselben Brechungsindex besitzt. Die Reliefstruktur kann vorher oder nachher erzeugt werden. Sie kann entweder auf derselben Seite oder auf der gegenüberliegenden Seite einer Trägerfolie aufgebracht sein. Das strukturierte Substrat kann auf verschiedene Arten erhalten werden. Eine Option ist die Reproduktion mit einem Master. Der Masterform kann z.B. nun in UV-Lack auf Folie, z.B. PET-Folie, repliziert werden. Man hat dann das Substrat 1 als dielektrisches Material. Alternativ kommen auch Heißprägeverfahren infrage.

Der Master oder auch das Substrat selbst kann mithilfe einer e-Beam-Anlage, einem fokussierten Ionenstrahl oder durch Interferenzlithographie hergestellt werden, wobei die Struktur in einen Photolack geschrieben und anschließend entwickelt wird. Die Struktur eines photolithographisch hergestellten Masters kann in einem Folgeschritt in ein Quarzsubstrat geätzt, werden, um möglichst senkrechte Flanken des Profils auszubilden. Der Quarzwafer dient dann als Vorform und kann z.B. in Ormocer umkopiert oder durch galvanische Abformung vervielfältigt werden. Ebenso ist eine direkte Abformung des photolithographisch hergestellten Originals in Ormocer bzw. in Nickel in einem galvanischen Verfahren möglich. Auch kann ein Motiv mit verschiedenen Gitterstrukturen in einem Nanoimprint-Verfahren ausgehend von homogenen Gittermastern zusammengesetzt werden. Solche Herstellverfahren für Subwellenlängen-Gitterstrukturen sind dem Fachmann bekannt.

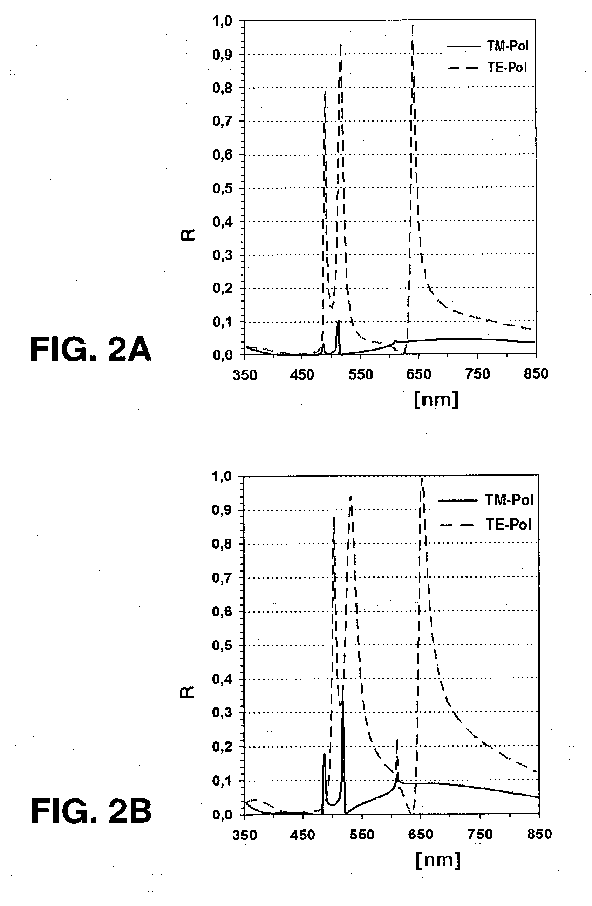

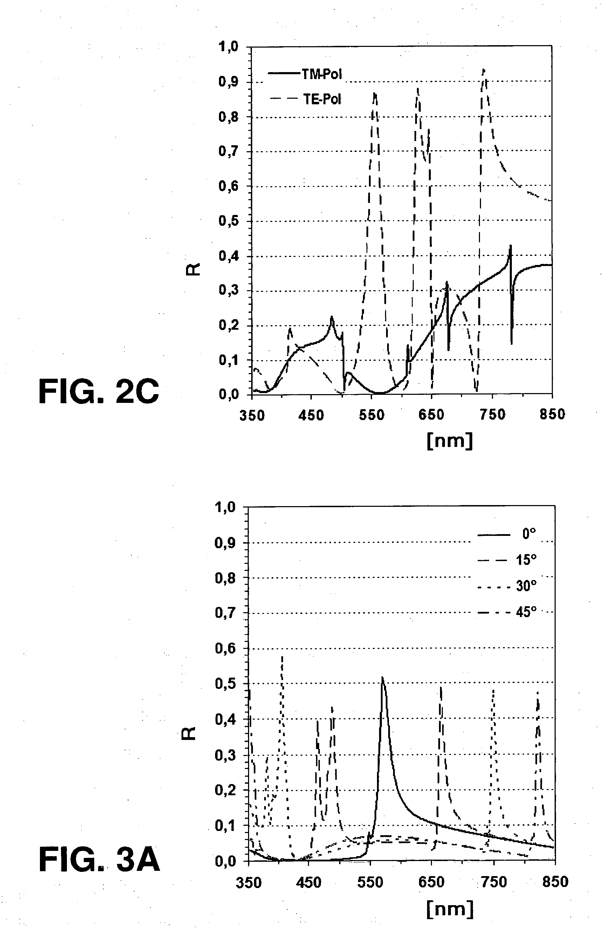

Im Folgenden werden die optischen Eigenschaften des Gitters der Fig. 1 exemplarisch für die hochbrechenden Materialen ZnO, Ta₂O₅ bzw. ZnS in einem umgebenden Substrat mit Brechzahl n = 1,52 im sichtbaren Wellenlängenbereich beschrieben. Hierbei ist angemerkt, dass ZnS als Dielektrikum gilt, jedoch einen deutlichen Absorptionsgehalt im Blauen hat. Ferner wird für die Gitterstege 3, 7 ein rechteckiges Profil angenommen. Kleine Abweichungen von dieser Rechteckform, z.B. eine produktionsbedingte Trapezform, führen zu ähnlichen Ergebnissen in der optischen Wirkung. Die Fig. 2a bis 2c zeigen die spektrale Reflexion für ein Liniengitter mit den Parametern d = 360 nm, b = d/2 für TM- und TE-Polarisation beim Winkel θ = 10°. In Fig. 2a ist ein Gitter mit ZnO als Material der Gitterstege dargestellt. In Fig. 2b ist das Material der Gitterstege Ta₂O₅, und in Fig. 2c ist es ZnS. In Fig. 2a sind die Parameter h = 210 nm, t = 120 nm, in Fig. 2b h = 200 nm, t = 100 nm und in Fig. 2c h = 200 nm, t = 80 nm. In den Spektren der TE-Polarisation sind jeweils drei ausgeprägte Maxima zu erkennen. Für TM-Polarisation ist die Reflexion deutlich geringer und in den Spektren sind nur relativ schwach ausgebildete Maxima vorhanden. Bei ZnO-Beschichtung erscheint die TM-Polarisation rot, die TE-Polarisation grün. Zudem ist die TE-Polarisation etwa dreimal so hell wie die TM-Polarisation. Bei Ta₂O₅-Beschichtung ist die TM-Polarisation in Orange, die TE-Polarisation in Grün zu sehen; letztere doppelt so hell wie die erste. Bei ZnS-Beschichtung erscheint die TM-Polarisation in Blau, die TE-Polarisation in Orange und ist zudem doppelt so hell. Diese Eigenschaften belegen die ausgeprägten Polarisationseigenschaften der Liniengitter, die nicht nur durch unterschiedliche Intensität in den Polarisationsrichtungen, sondern auch durch unterschiedliche Farben in Reflexion wahrgenommen werden können.

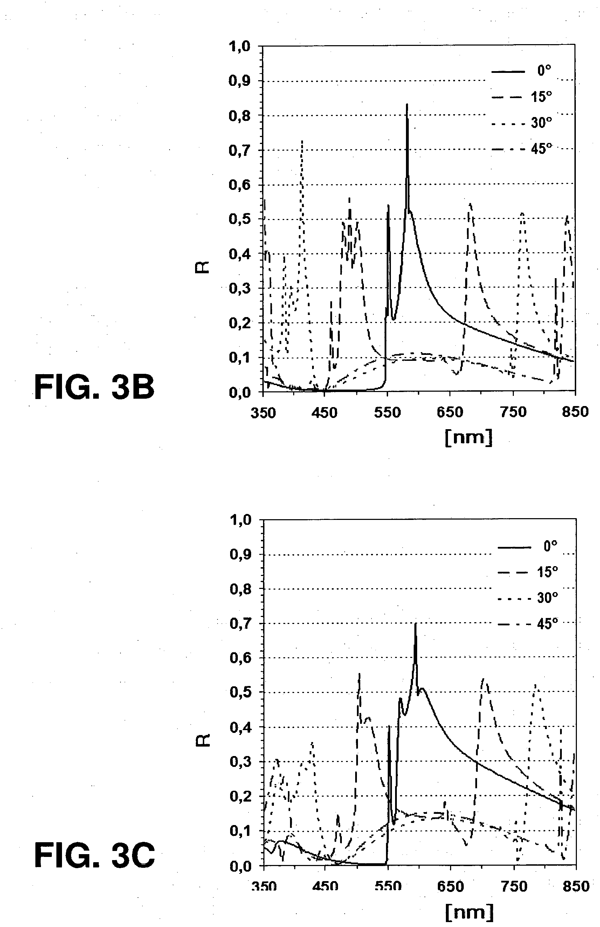

Fig. 3a bis 3c zeigen die spektrale Reflexion für die Materialien TiO₂ (Fig. 3a), Ta₂O₅ (Fig. 3b) und ZnS (Fig. 3c) der Gitterstege. Die Parameter betragen jeweils d = 360 nm, b = d/2, h = 200 nm und t = 100 nm. Das Gitter ist in ein Substrat mit der Brechzahl n = 1,52 eingebettet. Es wird mit unpolarisiertem Licht beleuchtet. Der Einfallswinkel variiert in den Darstellungen zwischen 0° und 45°. Für senkrechten Einfall zeigen die Gitter einen zentralen Peak bei einer Wellenlänge von etwa 570 nm. Je höher der Brechungsindex des Materials der Gitterstege, desto eher treten in der Umgebung des Peaks noch Nebenmaxima auf. Zugleich ist der Peak verbreitert. Bei zunehmendem Einfallswinkel spaltet sich dieser Peak in zwei Maxima auf, wobei eines in den kurzwelligen Bereich und das andere in den langwelligen Bereich verschoben ist. Bei Winkel größer als 40° verschwinden diese aufgespalteten Maxima aus dem sichtbaren Bereich und die mittlere Reflexion ist niedrig. Die Ausführungsbeispiele der Fig. 3a-c demonstrieren die ausgeprägten Farbfiltereigenschaften der Liniengitterstruktur sowie die farbliche Veränderung beim Kippen in der Einfallsebene bei unpolarisiertem Licht.

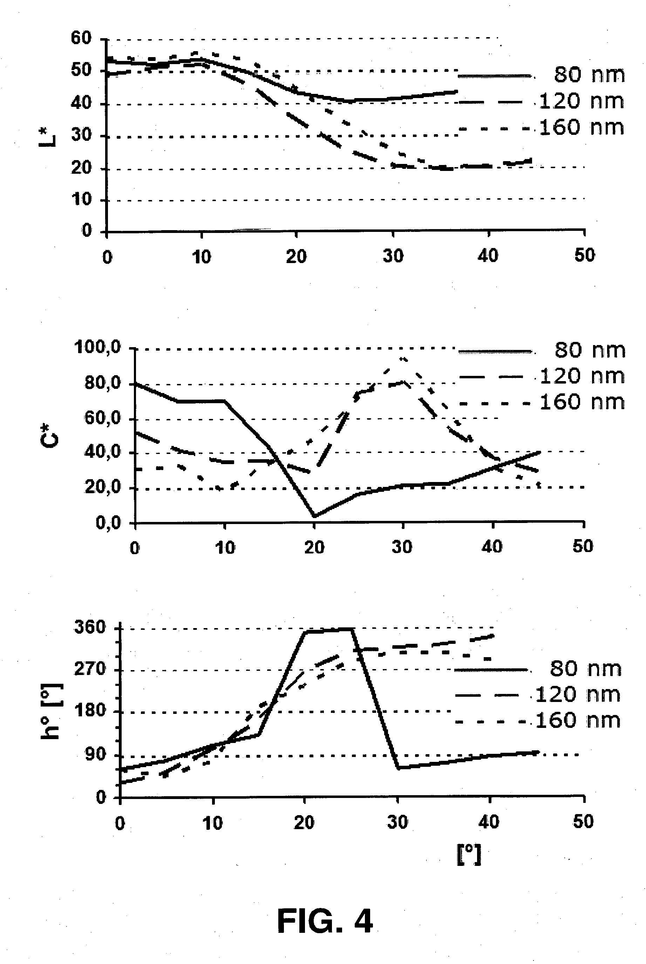

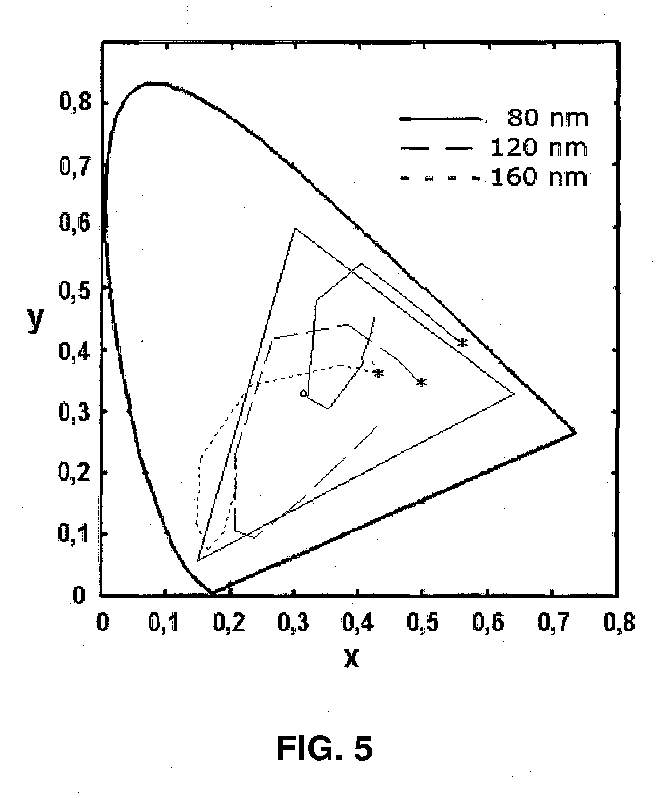

Anhand der nachfolgenden Figuren werden die Farbeigenschaften der Gitter im LCh-Farbraum untersucht. Dabei liegt die Beleuchtungskurve einer D65-Normlampe zugrunde sowie die Empfindlichkeit des menschlichen Auges. D65-Beleuchtung entspricht in etwa Tageslicht. In Fig. 4 zeigt die obere Darstellung die Helligkeit L*, die mittlere die Buntheit oder Farbsättigung C*, und die untere den Farbton h°. Fig. 4 zeigt die LCh-Farbwerte für ein Liniengitter mit unterschiedlichen Schichtdicken t von ZnS und den Parametern d = 360 nm, h = 210 nm und b = d/2 als Funktion des Einfallswinkels von 0° bis 45°. Es zeigt sich, dass die Intensität für dickere Schichten deutlich beim Kippen variiert. Ebenso ist die Buntheit deutlich ausgeprägter. Beim Winkel 30° ist sie maximal. Um diesen Effekt zu verdeutlichen, werden die Farbwerte x, y für das Gitter der Fig. 4 berechnet und im CIE-1931-Farbraum dargestellt (vgl. Fig. 5). Der Weißpunkt ist mit dem Symbol "o" gekennzeichnet. Das weiter eingezeichnete Dreieck umgrenzt den Farbbereich, der üblicherweise von Bildschirmen dargestellt werden kann. Im Diagramm sind die x-, γ-Farbkoordinaten, die sich beim Kippen von 0° nach 45° ergeben, als Trajektorien dargestellt. Der Anfangspunkt θ = 0° ist jeweils mit einem Stern gekennzeichnet. Fig. 5 zeigt deutlich, dass besonders die Gitter mit t = 120 nm und t = 160 nm in Reflexion einen sehr ausgeprägten Farbkippeffekt zeigen.

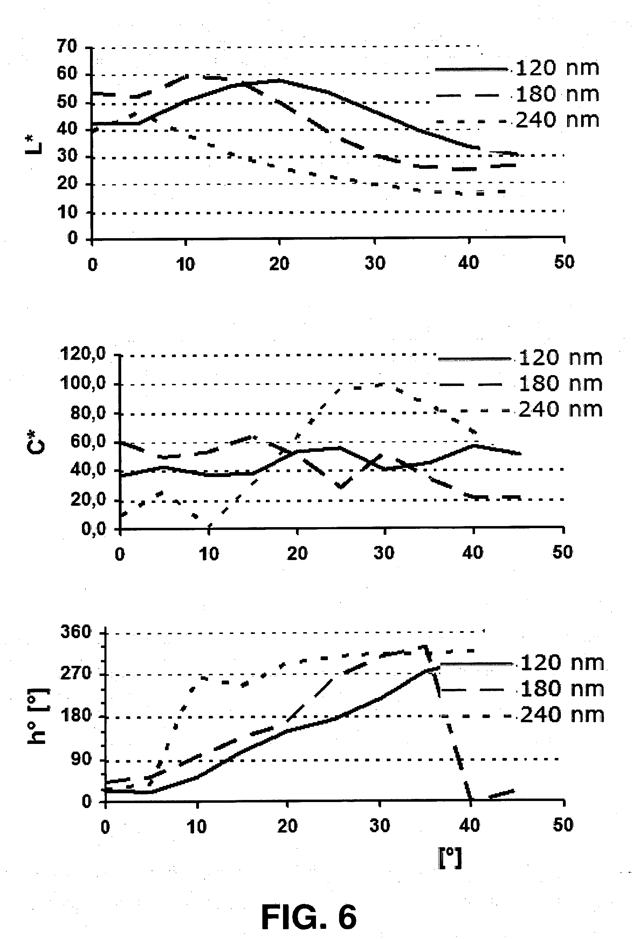

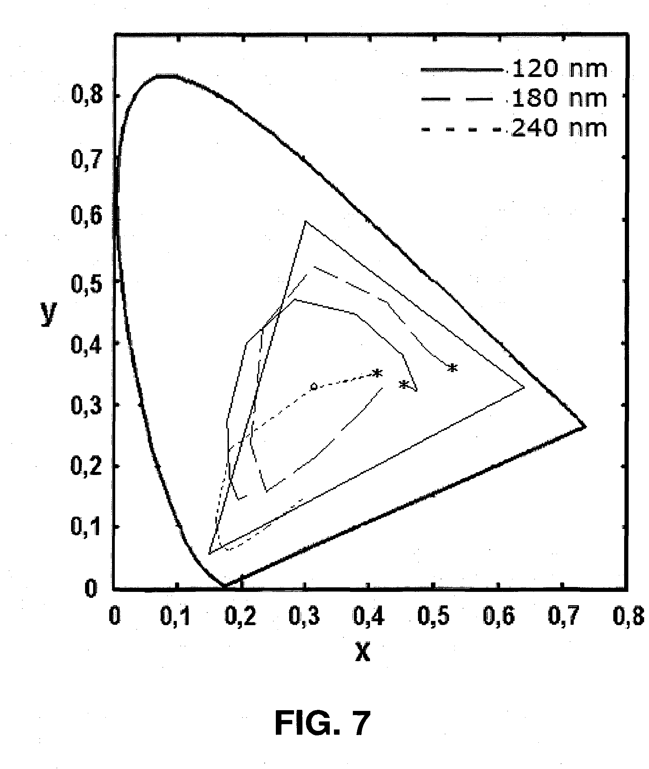

In einem weiteren Ausführungsbeispiel des Liniengitters wurde die Modulationstiefe h variiert. Fig. 6 zeigt die spektrale Reflexion als LCh-Farbwerte für ein Gitter mit ZnS als Material der Gitterstege 3, 7 und den Parametern d = 360 nm, b = d/2 und t = 120 nm für einen Einfallswinkelbereich von 0° bis 45°. Fig. 6 verdeutlicht, dass vor allem der Farbton und die Buntheit durch die Wahl der Modulationstiefe eingestellt werden kann. Eine sehr deutliche Veränderung zeigt sich vor allem beim Einfallswinkel θ = 30°. Fig. 7 zeigt die entsprechende Darstellung im CIE-1931-Farbraum. Die Trajektorien sind hier den unterschiedlichen Modulationstiefen zugeordnet. Der Anfangspunkt θ = 0° ist wiederum mit einem Stern gekennzeichnet. Das Farbdiagramm zeigt einen guten Farbkontrast. Die Farbe ändert sich von Rot beim senkrechten Einfall über Grün und Blau bis zu Magenta, wenn von 0° nach 45° gekippt wird. Die Buntheit und der Farbton können über die Wahl der Modulationstiefe eingestellt werden. Beispielsweise wird für zunehmendes h und zunehmendem kleineren Winkel ein Blauton erreicht.

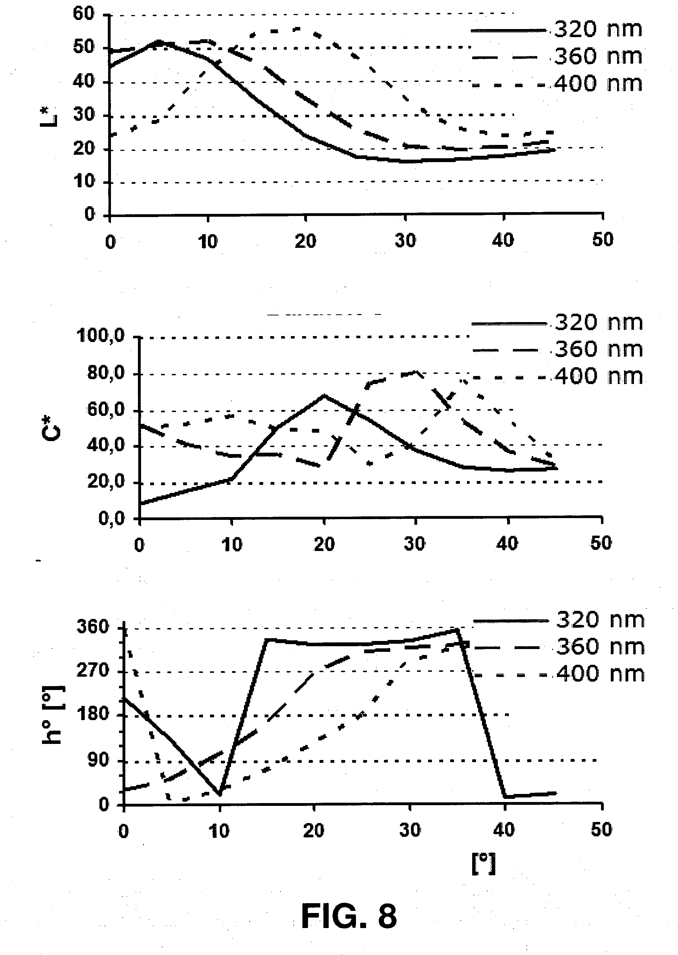

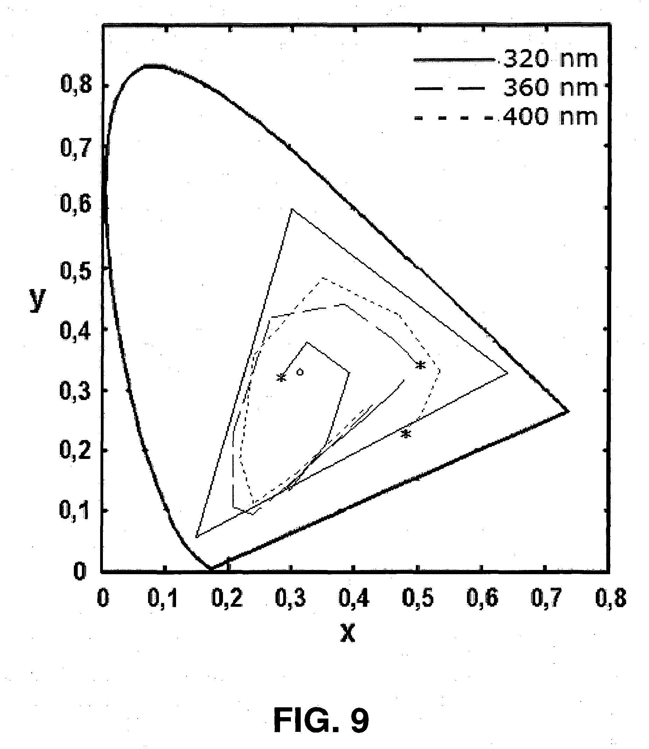

Fig. 8 veranschaulicht den Einfluss der Periode d auf die Farbeigenschaften des Liniengitters. In Fig. 8 sind Perioden von 320 nm, 360 nm und 400 nm hinsichtlich ihrer Auswirkungen im LCh-Farbraum dargestellt. Es ist ersichtlich, dass sich die Charakteristik der Helligkeitswerte für zunehmende Perioden hin zu größeren Einfallswinkeln verschiebt. Dies gilt auch für die Buntheit und den Farbton. Fig. 9 zeigt die entsprechenden Farbwerte im CIE-1931-Farbraum. Auch hier ist der Anfangspunkt θ = 0° mit einem Stern gekennzeichnet. Die unterschiedlichen Trajektorien sind den Perioden des Liniengitters zugeordnet. Es ist klar erkennbar, dass durch die entsprechende Wahl der Periode die gewünschte Farbe für einen bestimmten Einfallswinkel eingestellt werden kann. Eine Periode von d = 360 nm realisiert zudem einen kräftigen Farbumschlag beim Kippen von 0° auf 30°.

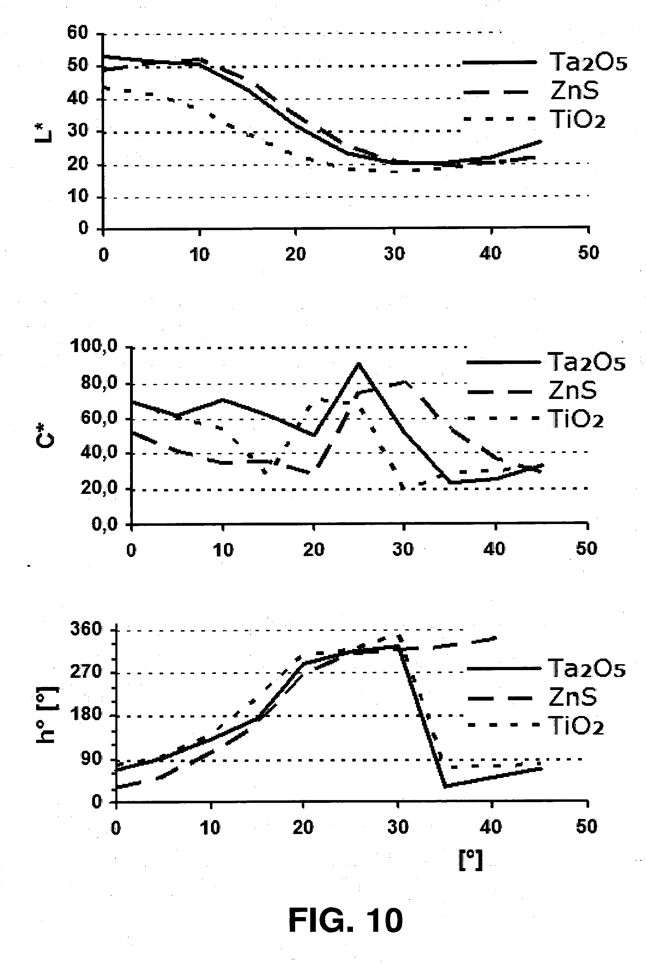

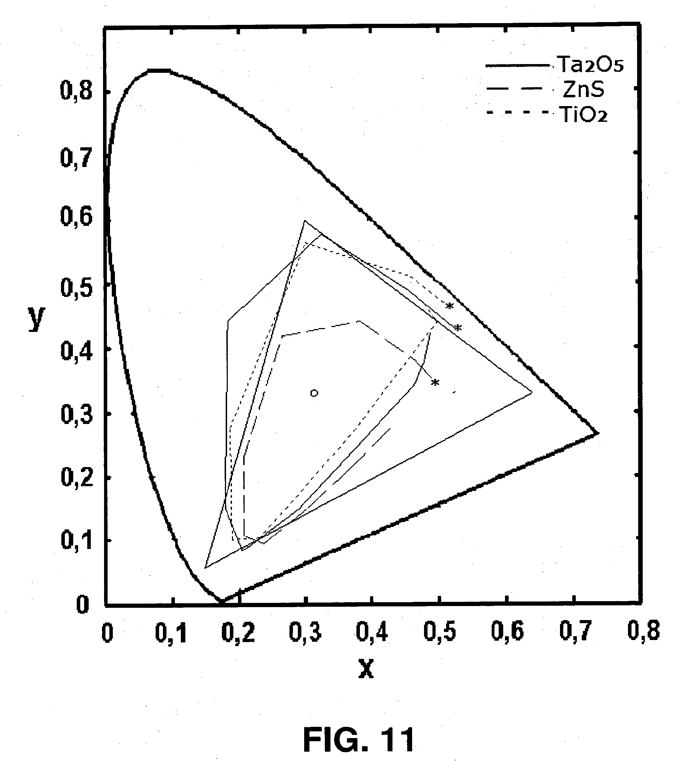

Fig. 10 zeigt den Einfluss des Materials der Gitterstege 3, 7 auf die Farbcharakteristik. In den Figuren sind die Materialen Ta₂O₅, ZnS, TiO₂ hinsichtlich der Auswirkung im LCh-Farbraum dargestellt. Im Wesentlichen zeigt sich ein relativ geringer Einfluss der unterschiedlichen Brechzahlen auf die Farbcharakteristik des Liniengitters beim Kippen. Fig. 11 zeigt die entsprechende Darstellung im CIE-1931-Farbraum. Hier zeigt sich, dass die Beschichtungen Ta₂O₅ und TiO₂ etwas stärker gesättigte Farben liefern als ZnS. Für die drei verschiedenen Materialien wird beim Kippen von 0° auf 45° die gesamte Farbpalette durchlaufen. Für TiO₂ ist die Farbintensität etwas schwächer als für die übrigen Materialien.

Die beschriebenen optischen Eigenschaften des Liniengitters werden dazu verwendet, um ein Sicherheitselement mit optisch variablen Farben in Reflexion zu gestalten. Das Sicherheitselement S besteht aus dem erläuterten Liniengitter auf einem metallisierten Reliefuntergrund 11. Dieser ist strukturiert, wie exemplarisch anhand Fig. 10a und 10b erläutert wird. Fig. 10a zeigt die Reliefstruktur 11 mit Abschnitten, die sich hinsichtlich der Reflexionseigenschaften unterscheiden. Eine Mottenaugenstruktur 12 wechselt sich mit einem reflektierenden, weil glatten Abschnitt 13 ab. Natürlich können anstelle der Mottenaugenstruktur 12 auch andere, bekannte lichtabsorbierende Strukturen, wie beispielsweise Mikrokavitäten, verwendet werden. Über den absorbierenden Abschnitten, hier der Mottenaugenstruktur 12, erscheint für einen Betrachter das Liniengitter in Reflexion farbig, da ein doppelter Durchlauf der einfallenden Strahlung E durch das Liniengitter aufgrund der absorbierenden Eigenschaften der Mottenaugenstruktur 12 nur dort möglich ist, wo die glatten Bereiche 13 ausgebildet sind. Damit erscheinen diejenigen Abschnitte des Sicherheitselementes, in denen die Liniengitterstruktur sich über den glatten Abschnitten 13 befindet, farblich neutral.

Fig. 12b zeigt schematisch ein Sicherheitselement, dessen Reliefstruktur 11 mit exemplarisch drei unterschiedlichen Abschnitten versehen ist, der Mottenaugenstruktur 12, einem glatten Abschnitt 15 und einer Mikrospiegelanordnung 14. Solche Mikrospiegelanordnungen eignen sich besonders, um Bewegungseffekte oder, als Anordnung in einer Fresnelstruktur, räumliche Eindrücke zu vermitteln. Durch die Mikrospiegelstruktur ergeben sich unterschiedliche Lichtpfade, die das visuelle Erscheinungsbild der Mikrospiegelflächen prägen.

In den Darstellungen der Fig. 12a und 12b ist die Liniengitterstruktur mit konstantem Profil, konstanter Periode und konstanter Längsrichtung ausgebildet. Natürlich kann diese Konstanz auch gegen eine Variation einer, beider oder aller dreier Parameter ersetzt werden. Insbesondere sind auch rein spiegelnde oder komplett transparente Bereiche möglich. Transparente Bereiche können z.B. mittels Laserablation oder in Waschfarbentechnik erzeugt werden.

Die technisch gesehen völlig frei wählbare Ausgestaltung der Reliefstruktur 11 und des Liniengitters erlaubt es, unterschiedliche Motive in diesen beiden Prägeebenen zu implementieren, also im Ergebnis sehr komplexe Bilder zu gestalten, die einerseits durch die Strukturierung der Reliefstruktur 11 und andererseits durch die Strukturierung des Liniengitters gestaltet sind. Insbesondere kann beim Liniengitter der Azimutwinkel, d.h. die Längsrichtung entlang der die Gitterstege 3, 7 verlaufen, bereichsweise unterschiedlich gewählt werden.

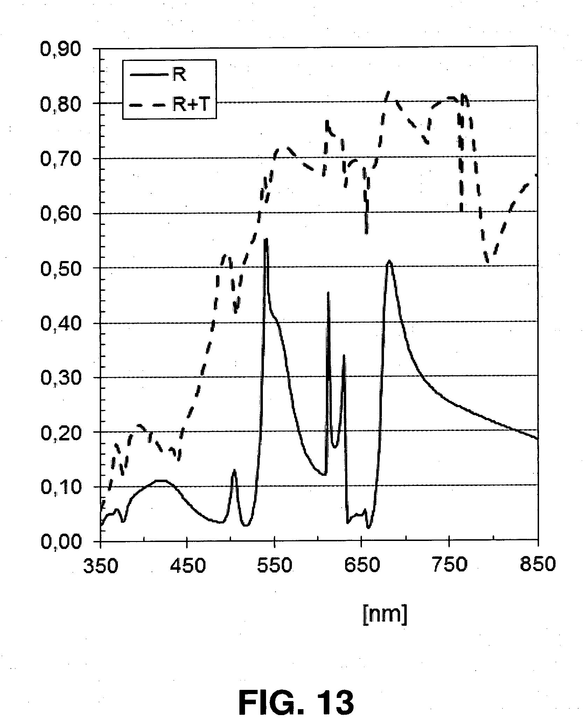

Fig. 13 zeigt exemplarisch, wie sich das farbliche Erscheinungsbild von gekippten Mikrospiegelflächen in der Reliefstruktur 11 darstellt. Dieses Erscheinungsbild wirkt sich insbesondere bei Tageslichtbedingungen und diffuser Beleuchtung aus, da dann das beleuchtende Licht aus verschiedensten Richtungen auf das Sicherheitselement fällt. Fig. 13 zeigt die spektrale Reflexion des Liniengitters und vergleicht das einer um 15° gekippten Mikrospiegelfläche. Da hierbei das Gitter von einem Teil der Strahlung zweimal durchlaufen wird, ist diese Kurve mit "R + T" bezeichnet, wohingegen der reflektive Anteil mit "R" in Fig. 13 markiert ist. Es zeigt sich, dass die Mikrospiegel nicht wie glatte metallische Bereiche farblich neutral sind, sondern etwas eingefärbt werden. Der Mikrospiegelbereich erscheint für einen Betrachter rötlich.

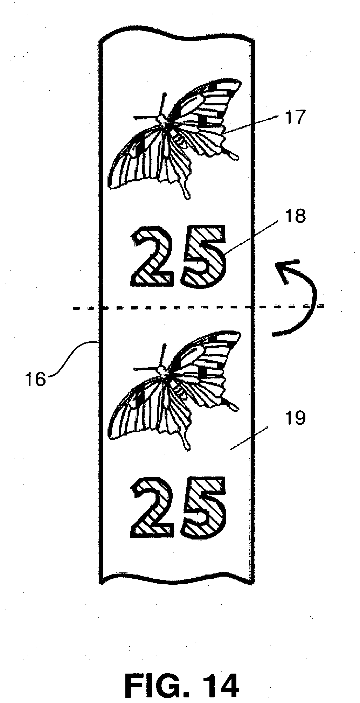

Die unterschiedlichen Gestaltungsmöglichkeiten durch Ausgestaltung der Reliefstruktur 11 und des Liniengitters sind geeignet, komplexe variable Motive auszubilden. Fig. 14 zeigt exemplarisch einen Sicherheitsfaden 16 für eine Banknote mit einem Motiv 1, das eine optisch variable Farbe hat, und einem Motiv 2, welches beim Kippen um die gestrichelt eingezeichnete Achse in Richtung des Pfeils farbinvariant ist. Ein erstes Motiv 17 ist als Schmetterling ausgebildet, ein zweites Motiv 18 als Wertzahl. Beide heben sich von einem Hintergrund 19 ab. Die Längsrichtung der Gitterstege verläuft im Hintergrund 19 sowie dem zweiten Motiv 18 längs des Sicherheitsfadens 16, im Motiv 17 waagrecht, also senkrecht zur Längsrichtung des Sicherheitsfadens 16. Die Reliefstruktur 11 ist unterhalb des Motivs 2 reflektierend und ansonsten lichtabsorbierend ausgestaltet. Beispielsweise ist sie im Bereich des Motivs 2 glatt und im sonstigen Bereich als Mottenaugenstruktur ausgebildet. Beim Drehen dieses Sicherheitselementes um einen Azimutwinkel kommt es beim Motiv 17 zu einer Farbvertauschung gegenüber dem Hintergrund 19. Das Motiv 18 erscheint davon unabhängig farblich neutral.

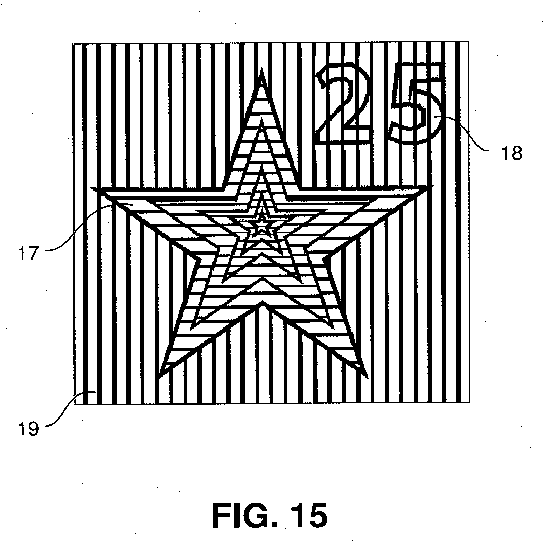

In einer weiteren Ausführungsform des Sicherheitselementes wird ein Laufeffekt der optisch variablen Farbe demonstriert. Fig. 15 zeigt ein Element mit einem Motiv 17 in Form eines Sterns sowie einem Motiv 18 in Form einer Wertzahl. Im Bereich des Motivs 18 ist die Reliefstruktur 11 glatt, d.h. hochreflektierend ausgebildet. Ansonsten ist sie wiederum lichtabsorbierend gestaltet, beispielsweise als Mottenaugenstruktur. Die Längsrichtung des Liniengitters ist im Bereich des Motivs 17 horizontal orientiert, im Hintergrund 19 hingegen vertikal. Der Stern ist in fünf ineinander verschachtelten sternförmigen Bereichen mit Liniengittern unterschiedlicher Periode gefüllt. Für einen bestimmten Winkel zeigt das Motiv einen kontinuierlichen Farbverlauf von außen nach innen, wenn die Gitterperiode vom äußeren zum inneren Bereich des Sterns zunimmt bzw. abnimmt. Wie Fig. 9 zeigt, kann durch die Wahl der Gitterperioden im Bereich von 320 nm bis 400 nm ein Farbbereich von Gelb bis Blau beispielsweise bei einem Winkel von 15° beobachtet werden. Die Farben laufen beim Kippen von außen nach innen. Bei einem Kippwinkel von 45° ist das gesamte Motiv rot.

Die Anordnung der Längsrichtung des Liniengitters ist nicht auf eine zueinander rechtwinklige Lage in verschiedenen Bereichen beschränkt. Es ist auch eine Ausgestaltung möglich, bei der sich die Längsrichtung zwischen Bereichen in Abstufungen ändert. Der Beobachter nimmt dann eine Art Bewegungseffekt wahr. Dies kann selbstverständlich bei der Ausgestaltung von Motiven Anwendung finden.

### Bezugszeichenliste

- 1: Substrat
- 2: erste Gitterstruktur
- 3: erster Gittersteg
- 4: erster Gitterspalt
- 5: Zwischenschicht
- 6: zweite Gitterstruktur
- 7: zweiter Gittersteg
- 8: zweiter Gitterspalt
- 9: Grundschicht
- 10: Deckschicht
- 11: Reliefschicht
- 12: Mottenaugenstruktur
- 14: Mikrospiegelstruktur
- 13, 15: glatter Abschnitt
- 16: Sicherheitsfaden
- 17: erstes Motiv
- 18: zweites Motiv
- 19: Hintergrund
- h: Modulationstiefe
- t, t1, t2: Beschichtungsdicke
- b: Linienbreite
- a: Spaltenbreite
- d: Periode
- S: Sicherheitselement
- L1, L2: Ebene
- E: einfallende Strahlung
- R: reflektierte Strahlung
- Θ: Einfallswinkel

## Patentansprüche

1. Sicherheitselement zur Herstellung von Wertdokumenten, wie Banknoten, Schecks oder dergleichen, das aufweist:
- ein dielektrisches Substrat (1),
- ein Liniengitter, das in das Substrat (1) eingebettete, längs einer Längsrichtung verlaufende und in einer ersten Ebene (L1) angeordnete erste Gitterstege (3) und in das Substrat (1) eingebettete, längs der Längsrichtung verlaufende und in einer zur ersten Ebene (L1) parallelen, zweiten Ebene (L2) angeordnete zweite Gitterstege (7) aufweist, wobei
-- die ersten und zweiten Gitterstege (3, 7) jeweils aus einem hochbrechenden Material bestehen,
-- die zweiten Gitterstege (7) sich bezogen auf die erste Ebene (L1) vollständig oberhalb der ersten Gitterstege (3) befinden, so dass die ersten und zweiten Gitterstege (3, 7) keinen zusammenhängenden Film bilden und
-- die ersten Gitterstege (3) jeweils eine Breite haben und in einem Abstand nebeneinanderliegen, so dass zwischen den ersten Gitterstegen (3) längs der Längsrichtung verlaufende erste Gitterspalte (4) mit dem Abstand entsprechender Breite gebildet sind,
-- die Anordnung der zweiten Gitterstege (7) zu der der ersten Gitterstege (3) invertiert ist, so dass in Draufsicht auf die erste oder zweite Ebene die zweiten Gitterstege (7) über den ersten Gitterspalten (4) und zweite Gitterspalte (8), die zwischen den zweiten Gitterstegen (7) bestehen, unter den ersten Gitterstegen (3) liegen,
-- die Breite der ersten Gitterstege (3) und der zweiten Gitterspalte (8), die Breite der zweiten Gitterstege (7) und der ersten Gitterspalte (4) und eine Dicke der ersten Gitterstege (3) und der zweiten Gitterstege (7) jeweils unter 300 nm ist,
-- im Sicherheitselement (S) verschiedene Bereiche (17 - 19) gebildet sind, die sich hinsichtlich einer Struktur des Liniengitters unterscheiden, wobei die verschiedenen Bereiche mindestens ein Motiv codieren, das in Draufsicht auf das Sicherheitselement sichtbar ist,
**dadurch gekennzeichnet, dass**
- in Draufsicht unterhalb des Liniengitters eine metallisierte Reliefstruktur (11) angeordnet ist, die verschiedene Abschnitte (12 - 15) aufweist, welche sich hinsichtlich des Reliefs und der Strahlungsreflexion unterscheiden, wobei die verschiedenen Abschnitte (12 - 15) der metallisierten Reliefstruktur (11) den verschiedenen Bereichen (17 -19) des Liniengitters zugeordnet sind und das Motiv weiter strukturieren.

2. Sicherheitselement nach Anspruch 1, wobei die Bereiche (17 - 19) sich mindestens teilweise auch hinsichtlich Profilparameter des Liniengitters unterscheiden.

3. Sicherheitselement nach einem der obigen Ansprüche, wobei die hochbrechende Schicht aus ZnS, ZnO, ZnSe, SiNₓ, SiOₓ, Cr₂O₃, Nb₂O₅, Ta₂O₅, TiₓOₓ SiOx und ZrO₂ gebildet ist.

4. Sicherheitselement nach einem der obigen Ansprüche, wobei die Reliefstruktur (11) eine Mottenaugenstruktur (12) mit einer mittleren Periode von 150 nm bis 500 nm enthält.

5. Sicherheitselement nach einem der obigen Ansprüche, wobei die Reliefstruktur (11) eine Mikrokavitätenstruktur mit einer mittleren Periode von 500 nm bis 2000 nm enthält.

6. Sicherheitselement nach einem der obigen Ansprüche, wobei die Reliefstruktur (11) eine Mikrospiegelanordnung (14) mit einer mittleren horizontalen Ausdehnung in einer Raumrichtung von 2 µm bis 20 µm enthält.

7. Sicherheitselement nach einem der obigen Ansprüche, wobei die Reliefstruktur (11) mindestens einen glatten und/oder transparenten Abschnitt (13,15) enthält.

8. Sicherheitselement nach einem der obigen Ansprüche, wobei die Reliefstruktur (11) mit einer metallischen Schicht wie z.B. Aluminium, Silber, Kupfer, Palladium, Gold, Chrom, Nickel sowie deren Legierungen beschichtet ist.

9. Sicherheitselement nach einem der obigen Ansprüche, wobei die Reliefstruktur (11) mit einem Multilayer mit mindestens einer metallischen Schicht beschichtet ist.

10. Wertdokument mit einem Sicherheitselement nach einem der Ansprüche 1 bis 9.

11. Herstellungsverfahren für ein Sicherheitselement zur Herstellung von Wertdokumenten, wie Banknoten, Schecks oder dergleichen, wobei:
- ein dielektrisches Substrat (1) bereitgestellt wird,
- ein Liniengitter in das Substrat (1) eingebettet wird, das längs einer Längsrichtung verlaufende und in einer ersten Ebene (L1) angeordnete erste Gitterstege (3) und längs der Längsrichtung verlaufende und in einer zur ersten Ebene (L1) parallelen, zweiten Ebene (L2) angeordnete zweite Gitterstege (7) aufweist, wobei
-- die ersten und zweiten Gitterstege (3, 7) jeweils aus einem dielektrischen, hochbrechenden Material bestehen,
-- die zweiten Gitterstege (7) sich bezogen auf die erste Ebene (L1) vollständig oberhalb der ersten Gitterstege (3) befinden, so dass die ersten und zweiten Gitterstege (3, 7) keinen zusammenhängenden Film bilden und
-- die ersten Gitterstege (3) jeweils eine Breite haben und in einem Abstand nebeneinanderliegen, so dass zwischen den ersten Gitterstegen (3) längs der Längsrichtung verlaufende erste Gitterspalte (4) mit dem Abstand entsprechender Breite gebildet sind,
-- die Anordnung der zweiten Gitterstege (7) zu der der ersten Gitterstege (3) invertiert ist, so dass in Draufsicht auf die erste oder zweite Ebene die zweiten Gitterstege (7) über den ersten Gitterspalten (4) und zweite Gitterspalte (8), die zwischen den zweiten Gitterstegen (7) bestehen, unter den ersten Gitterstegen (3) liegen,
-- die Breite der ersten Gitterstege (3) und der zweiten Gitterspalte (8), die Breite der zweiten Gitterstege (7) und der ersten Gitterspalte (4) und eine Dicke der ersten Gitterstege (3) und der zweiten Gitterstege (7) jeweils unter 300 nm ist,
- im Sicherheitselement (S) verschiedene Bereiche (17 - 19) ausgebildet werden, die sich in einer Struktur des Liniengitters unterscheiden, wobei die verschiedenen Bereiche mindestens ein Motiv codieren, das in Draufsicht auf das Sicherheitselement sichtbar ist,
**dadurch gekennzeichnet, dass**
- in Draufsicht unterhalb des Liniengitters eine metallisierte Reliefstruktur (11) angeordnet wird, die verschiedene Abschnitte (12 - 15) aufweist, welche sich hinsichtlich des Reliefs und der Strahlungsreflexion unterscheiden, wobei die verschiedenen Abschnitte (12 - 15) der metallisierten Reliefstruktur (11) den verschiedenen Bereichen (17 - 19) des Liniengitters zugeordnet werden und das Motiv weiter strukturieren.

## Claims

1. Security element for manufacturing documents of values, as banknotes, checks or the like, the security element comprising:
- a dielectrical substrate (1),
- a line grid, comprising first grid bars (3) which extend along a longitudinal direction and are located in a first plane (L1) and which are embedded in the substrate (1), and second grid bars (7), which extend along the longitudinal direction and are located in a second plane (L2) being parallel to the first plane (L1) and which are embedded in the substrate (1), wherein
-- the first and the second grid bars (3, 7) each consist of a highly refractive material,
-- the second grid bars (7) are, in relation to the first plane (L1), located fully above the first grid bars (3) such that the first and the second grid bars (3, 7) do not form a continuous film, and
-- the first grid bars (3) each have a width and are spaced at a distance adjacent to each other such that first grid gaps (4) extending along the longitudinal direction and having a width corresponding to the spacing are formed between the first grid bars (3),
-- the arrangement of the second grid bars (7) is inverted to that of the first grid bars (3), such that in top view onto the first or the second plane the second grid bars (7) are located above the first grid gaps (4) and that second grid gaps (8) which exist between the second grid bars (7) are located below the first grid bars (3),
-- the width of the first grid bars (3) and the second grid gaps (8), the width of the second grid bars (7) and the first grid gaps (4), and a thickness of the first grid bars (3) and of the second grid bars (7) are each below 300 nm,
-- several regions (17-19) are formed in the security element (S), which regions are different regarding a structure of the line grid, wherein the different regions code at least one motive which can be seen in a top view of the security element,
**characterized in that**
- in top view a metallized relief structure (11) is positioned below the line grid, which relief structure (11) comprises different areas (12-15) being different from each other regarding the relief and the reflection of radiation, wherein the different aras (12-15) of the metallized relief structure (11) are assigned to the different regions (17-19) of the line grid and structure the motive further.

2. The security element according to claim 1, wherein the regions (17-19) are different from each other at least partially also regarding profile parameter of the line grid.

3. The security element according to any of the above claims, wherein the high-refractive layer is formed from ZnS, ZnO, ZnSe, SiNx, SiOx, Cr₂O₃, Nb₂O₅, Ta₂O₅, TiₓOₓSiOₓ and ZrO₂.

4. The security element according to any of the above claims, wherein the relief structure (11) comprises a moth eye structure (12) having a mean period from 150 nm to 500 nm.

5. The security element according to any of the above claims, wherein the relief structure (11) comprises a micro cavity structure having a mean period from 500 nm to 2000 nm.

6. The security element according to any of the above claims, wherein the relief structure (11) comprises a micro mirror arrangement (14) having a mean horizontal extension in one dimension from 2 µm to 20 µm.

7. The security element according to any of the above claims, wherein the relief structure comprises at least one smooth and/or transparent section (13,15).

8. The security element according to any of the above claims, wherein the relief structure (11) is coated with a metallic layer, e.g. aluminum, silver, copper, palladium, gold, chrome, nickel or alloys therefrom.

9. The security element according to any of the above claims, wherein the relief structure (11) is covered by a multilayer comprising at least one metallic layer.

10. A document of value having a security element according to any of claims 1 through 9.

11. A method of manufacturing a security element for manufacturing documents of value, as banknotes, checks or the like, wherein
- a dielectrical substrate (1) is provided,
- a line grid is embedded into the substrate (1) the line grid comprising first grid bars (3) which extend along a longitudinal direction and are located in a first plane (L1), and second grid bars (7) which extend along the longitudinal direction and are located in a second plane (L2) which is parallel to the first plane (L1), wherein
-- the first and the second grid bars (3, 7) each consist of a dielectrical highly refractive material,
-- the second grid bars (7) are, in relation to the first plane (L1), located fully above the first grid bars (3) such that the first and the second grid bars (3, 7) do not form a continuous film, and
-- the first grid bars (3) each have a width and are located in a spacing adjacent to each other such that first grid gaps (4) extending along the longitudinal direction and having a width corresponding to the spacing are formed between the first grid bars (3),
-- the arrangement of the second grid bars (7) is inverted to that of the first grid bars (3), such that in a top view on the first or second plane the second grid bars (7) are located above the first grid gaps (4) and that second grid gaps (8) which exist between the second grid bars (7) are located below the first grid bars (3),
-- the width of the first grid bars (3) and the second grid gaps (8), the width of the second grid bars (7) and the first grid gaps (4), and a thickness of the first grid bars (3) and the second grid bars (7) is each below 300 nm,
-- several regions (17-19) are formed in the security element (S), which regions are different regarding a structure of the line grid, wherein the different regions code at least one motive which can be seen in a top view of the security element,
**characterized in that**
- in top view a metallized relief structure (11) is positioned below the line grid, which relief structure (11) comprises different areas (12-15) being different from each other regarding the relief and the reflection of radiation, wherein the different areas (12-15) of the metallized relief structure (11) are assigned to the different regions (17-19) of the line grid and structure the motive further.

## Revendications

1. Elément de sécurité pour la fabrication de documents de valeur, tels que des billets de banque, des chèques ou similaires, présentant :
- un substrat diélectrique (1),
- une grille de lignes qui présente des premières rangées de grille (3) incorporées dans le substrat (1), s'étendant le long d'une direction longitudinale et disposées dans un premier plan (L1), et des deuxièmes rangées de grille (7) incorporées dans le substrat (1), s'étendant le long de la direction longitudinale et disposées dans un deuxième plan (L2) parallèle au premier plan (L1), dans lequel
- les premières et deuxièmes rangées de grille (3, 7) sont respectivement composées d'un matériau fortement réfringent,
- les deuxièmes rangées de grille (7) se trouvent entièrement au-dessus des premières rangées de grille (3) par rapport au premier plan (L1) de sorte que les premières et deuxièmes rangées de grille (3, 7) ne forment pas de film cohérent, et
- les premières rangées de grille (3) présentent respectivement une largeur et sont adjacentes avec un espacement tel qu'entre les premières rangées de grille (3), des premières colonnes de grille (4) s'étendant le long de la direction longitudinale sont formées avec une largeur correspondant à l'espacement,
- la disposition des deuxièmes rangées de grille (7) est inversée par rapport à celle des premières rangées de grille (3) de sorte qu'en vue de dessus sur le premier ou le deuxième plan, les deuxièmes rangées de grille (7) sont situées au-dessus des premières colonnes de grille (4), et des deuxièmes colonnes de grille (8) qui existent entre les deuxièmes rangées de grille (7) sont situées au-dessous des premières rangées de grille (3),
- la largeur des premières rangées de grille (3) et des deuxièmes colonnes de grille (8), la largeur des deuxièmes rangées de grille (7) et de la première colonne de grille (4), et une épaisseur des premières rangées de grille (3) et des deuxièmes rangées de grille (7) sont respectivement inférieures à 300 nm,
- dans l'élément de sécurité (S), différentes zones (17 à 19) sont formées qui se distinguent par une structure de la grille de lignes, les différentes zones codant au moins un motif qui est visible en vue de dessus sur l'élément de sécurité,
**caractérisé en ce que**
- en vue de dessus au-dessous de la grille de lignes, une structure en relief métallisée (11) est disposée qui présente différentes parties (12 à 15) qui se distinguent par le relief et la réflexion de rayonnement, les différentes parties (12 à 15) de la structure en relief métallisée (11) étant associées aux différentes zones (17 à 19) de la grille de lignes et poursuivant la structuration du motif.

2. Elément de sécurité selon la revendication 1, dans lequel les zones (17 à 19) se distinguent au moins en partie aussi par des paramètres de profil de la grille de lignes.

3. Elément de sécurité selon l'une quelconque des revendications précédentes, dans lequel la couche fortement réfringente est formée en ZnS, ZnO, ZnSe, SiNₓ, SiOₓ, Cr₂O₃, Nb₂O₅, Ta₂O₅, TiₓOₓ, SiOₓ et ZrO₂.

4. Elément de sécurité selon l'une quelconque des revendications précédentes, dans lequel la structure en relief (11) contient une structure en forme d'œil de mite (12) ayant une période moyenne de 150 nm à 500 nm.

5. Elément de sécurité selon l'une quelconque des revendications précédentes, dans lequel la structure en relief (11) contient une structure de microcavités ayant une période moyenne de 500 nm à 2000 nm.

6. Elément de sécurité selon l'une quelconque des revendications précédentes, dans lequel la structure en relief (11) contient un agencement de micro-miroirs (14) ayant une dimension horizontale moyenne dans une direction spatiale de 2 µm à 20 µm.

7. Elément de sécurité selon l'une quelconque des revendications précédentes, dans lequel la structure en relief (11) contient au moins une partie lisse et/ ou transparente (13,15).

8. Elément de sécurité selon l'une quelconque des revendications précédentes, dans lequel la structure en relief (11) est recouverte d'une couche métallique, comme par exemple l'aluminium, l'argent, le cuivre, le palladium, l'or, le chrome, le nickel ainsi que leurs alliages.

9. Elément de sécurité selon l'une quelconque des revendications précédentes, dans lequel la structure en relief (11) est recouverte de couches multiples comprenant au moins une couche métallique.

10. Document de valeur comprenant un élément de sécurité selon l'une quelconque des revendications 1 à 9.

11. Procédé de fabrication pour un élément de sécurité permettant de fabriquer des documents de valeur, tels que des billets de banque, des chèques ou similaires, dans lequel :
- un substrat diélectrique (1) est prévu,
- une grille de lignes est incorporée dans le substrat (1) qui présente des premières rangées de grille (3) s'étendant dans une direction longitudinale et disposées dans un premier plan (L1), et des deuxièmes rangées de grille (7) s'étendant le long de la direction longitudinale et disposées dans un deuxième plan (L2) parallèle au premier plan (L1), dans lequel
- les premières et deuxièmes rangées de grille (3, 7) sont respectivement composées d'un matériau fortement réfringent,
- les deuxièmes rangées de grille (7) se trouvent entièrement au-dessus des premières rangées de grille (3) par rapport au premier plan (L1) de sorte que les premières et deuxièmes rangées de grille (3, 7) ne forment pas de film cohérent, et
- les premières rangées de grille (3) présentent respectivement une largeur et sont adjacentes avec un espacement tel qu'entre les premières rangées de grille (3) des premières colonnes de grille (4) s'étendant le long de la direction longitudinale sont formées avec une largeur correspondant à l'espacement,
- la disposition des deuxièmes rangées de grille (7) est inversée par rapport à celle des premières rangées de grille (3) est inversée de sorte qu'en vue de dessus sur le premier ou le deuxième plan, les deuxièmes rangées de grille (7) sont situées au-dessus des premières colonnes de grille (4), et les deuxièmes colonnes de grille (8) qui existent entre les deuxièmes rangées de grille (7) sont situées au-dessous des premières rangées de grille (3),
- la largeur des premières rangées de grille (3) et des deuxièmes colonnes de grille (8), la largeur des deuxièmes rangées de grille (7) et de la première colonne de grille (4), et une épaisseur des premières rangées de grille (3) et des deuxièmes rangées de grille (7) sont respectivement inférieures à 300 nm,
- dans l'élément de sécurité (S), différentes zones (17 à 19) sont réalisées qui se distinguent par une structure de la grille de lignes, les différentes zones codant au moins un motif qui est visible en vue de dessus sur l'élément de sécurité,
**caractérisé en ce que**
- en vue de dessus au-dessous de la grille de lignes, une structure en relief métallisée (11) est disposée qui présente différentes parties (12 à 15) qui se distinguent par le relief et la réflexion de rayonnement, les différentes parties (12 à 15) de la structure en relief métallisée (11) étant associées aux différentes zones (17 à 19) de la grille de lignes et poursuivant la structuration du motif.
